# EUROPÄISCHE PATENTANMELDUNG

(11) **EP 2 506 676 A2**
(43) Veröffentlichungstag der Anmeldung: **03.10.2012**
(21) Anmeldenummer: 12160786.5
(22) Anmeldetag: 22.03.2012
(51) Int. Cl.: H05B 6/12

(54) **Induktionskochfeld mit einer Kochfeldplatte und Verfahren zum Betreiben eines Induktionskochfelds**

(30) Priorität: 31.03.2011 ES 201130513
(71) Anmelder: BSH Bosch und Siemens Hausgeräte GmbH, 81739 München (DE)
(72) Erfinder: Carretero Chamarro, Claudio, 50003 Zaragoza (ES); Hernandez Blasco, Pablo Jesus, 50410 Cuarte de Huerva (Zaragoza) (ES); Llorente Gil, Sergio, 50009 Zaragoza (ES); Lucia Gil, Oscar, 50006 Zaragoza (ES); Millan Serrano, Ignacio, 50018 Zaragoza (ES); Palacios Tomas, Daniel, 50008 Zaragoza (ES)

(57) **Zusammenfassung**

Die Erfindung betrifft ein Induktionskochfeld (1) mit einer Kochfeldplatte (2) und zumindest einem unter der Kochfeldplatte (2) angeordneten Induktor (9, 12), der zumindest ein plattenartiges magnetischen Rückschlusselement (17) und eine Induktionsspule (18) aufweist, welche mit dem magnetischen Rückschlusselement (17) in Wechselwirkung ist, und eine wannenartige Aufnahme (11), durch welche der Induktor (9, 12) zumindest von unten umgeben ist, wobei zumindest eine Positionsveränderungsvorrichtung (14, 21) ausgebildet ist, durch welche der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) veränderbar ist. Die Erfindung betrifft auch ein Verfahren zum Betreiben eines Induktionskochfelds (1).

## Beschreibung

Die Erfindung betrifft ein Induktionskochfeld mit einer Kochfeldplatte und zumindest einem unter der Kochfeldplatte angeordneten Induktor. Der Induktor weist zumindest ein plattenartiges magnetisches Rückschlusselement und eine Induktionsspule auf, welche mit dem magnetischen Rückschlusselement in Wechselwirkung ist. Das Induktionskochfeld umfasst darüber hinaus eine wannenartige Aufnahme, durch welche der Induktor zumindest von unten umgeben ist. Des Weiteren betrifft die Erfindung ein Verfahren zum Betreiben eines Induktionskochfelds.

Induktionskochfelder sind in vielfältiger Ausgestaltung bekannt. Die unter der Kochfeldplatte üblicherweise ortsfest angeordneten Induktoren erzeugen in Wechselwirkung mit Zubereitungsgefäßen, die über einem Induktor auf der Oberseite der Kochfeldplatte aufgestellt sind, Wärme, durch welche das Gargut in dem Zubereitungsgefäß zubereitet wird. Da es eine Vielzahl von unterschiedlichen Zubereitungsgefäßen gibt, die sich sowohl in Größe, Form und Material zum Teil deutlich unterscheiden, ist die elektromagnetische Wechselwirkung mit den ortsfest angeordneten Induktoren schwankend. Dies wirkt sich dann auch auf die erzeugbare und einbringbare elektrische Leistung aus. Insbesondere ist dabei auch die Energieeffizienz im Betrieb situationsspezifisch beeinträchtigt.

Die übliche Schaltungstopologie beim einem induktiven Heizen eines Induktionskochfelds umfasst die Verwendung von Halbbrücken-Serien-Resonatoren. Die hauptsächlich zu berücksichtigenden Parameter bei der Entwicklung der Topologien ist der Resonanzkondensator und das Induktorsystem, durch welches dann auch der Widerstand und die Induktivität gegeben sind. Der Widerstand und die Induktivität des Schwingkreises hängen dann jedoch auch von dem auf der Kochfeldplatte aufgestellten Zubereitungsgefäß ab. Induktives Heizen erfordert die Verwendung von magnetischen Rückschlusselementen, insbesondere ferromagnetischen Materialien, um die Spule heizen zu können und ein Mindestmaß an Effizienz gewährleisten zu können. Wie bereits oben angesprochen, gibt es jedoch eine Vielzahl unterschiedlich ausgestalteter Zubereitungsgefäße, sodass deren Einfluss auf den elektromagnetischen Schwingkreis, umfassend das Zubereitungsgefäß und den Induktor, zum Teil erheblich ist. Es können somit auch erhebliche elektrische Leistungsverluste im Betrieb des Induktionskochfelds auftreten. Ein Zubereitungsgefäß, welches im Hinblick auf die elektrotechnische Darstellung durch einen Ersatzschaltkreis aus einer Serienschaltung eines Widerstands und einer Induktivität charakterisiert wird, ist daher ein wesentlicher Einflussfaktor auf das Betriebsverhalten des elektromagnetischen Schwingkreises.

Die Effizienz eines Induktionskochfelds hängt wesentlich von den Leistungsverlusten der Schaltbauteile ab.

Es ist Aufgabe der vorliegenden Erfindung, ein Induktionskochfeld sowie ein Verfahren zum Betreiben eines Induktionskochfelds zu schaffen, mit welchem bzw. bei welchem die Leistungsverluste im Betrieb reduziert werden können.

Diese Aufgabe wird durch ein Induktionskochfeld, welches die Merkmale nach Anspruch 1 aufweist, und ein Verfahren, welches die Merkmale nach Anspruch 11 aufweist, gelöst.

Ein erfindungsgemäßes Induktionskochfeld umfasst eine Kochfeldplatte und zumindest einen unter der Kochfeldplatte angeordneten Induktor. Der Induktor umfasst zumindest ein plattenartiges magnetisches Rückschlusselement. Darüber hinaus umfasst der Induktor auch eine Induktionsspule, welche mit dem magnetischen Rückschlusselement in elektromagnetischer Wechselwirkung ist. Das Induktionskochfeld weist eine wannenartige Aufnahme auf, durch welche der Induktor zumindest von unten umgeben ist. Das Induktionskochfeld umfasst zumindest eine Positionsveränderungsvorrichtung, durch welche der vertikale Abstand zwischen der Unterseite der Kochfeldplatte und dem Induktor und/oder der vertikale Abstand zwischen dem magnetischen Rückschlusselement und der wannenartigen Aufnahme veränderbar ist. Durch eine derartige Ausgestaltung mit zumindest einer Positionsveränderungsvorrichtung können die Positionen der genannten Komponenten relativ zueinander verändert werden. Durch eine derartige Ausgestaltung ist es daher sehr einfach und präzise möglich, die elektromagnetische Wechselwirkung individuell zu verändern. Es kann somit erreicht werden, dass auch bei unterschiedlichsten Zubereitungsgefäßen, die auf die Kochfeldplatte aufgestellt und elektromagnetisch mit dem Induktor gekoppelt werden, das Betriebsverhalten im Hinblick auf die elektrischen Leistungsverluste wesentlich verbessert wird. Auch bei unterschiedlichsten Zubereitungsgefäßen kann somit durch die Veränderung des Abstands zwischen der Unterseite der Kochfeldplatte und dem Induktor und/oder des Abstands zwischen dem Rückschlusselement und der Aufnahme ein Arbeiten des elektromagnetischen Schwingkreises nahe an der Resonanzfrequenz erreicht werden. Dadurch können die elektrischen Leistungsverluste bei unterschiedlichsten Schwingkreisausgestaltungen minimiert werden.

Bei einer Abstandsänderung zwischen der Unterseite der Kochfeldplatte und dem Induktor ist insbesondere eine relative Positionsverschiebung des gesamten Induktors vorgesehen. Bei einer Abstandsänderung zwischen dem Rückschlusselement und dem Boden der Aufnahme ist insbesondere vorgesehen, dass der Induktor als solcher nicht als Ganzes verschoben wird, sondern nur diese Teilkomponente des Rückschlusselements oder der Rückschlusselemente relativ zur Aufnahme und zu anderen Teilen des Induktors vertikal verschiebbar ist.

Vorzugsweise ist vorgesehen, dass die Positionsveränderungsvorrichtung als elektro-mechanische Vorrichtung ausgebildet ist. Derartige Ausgestaltungen sind mechanisch sehr robust und verschleißarm. Sie ermöglichen darüber hinaus auch eine sehr ruckfreie und kontinuierliche Verschiebung. Insbesondere kann eine Positionsveränderungsvorrichtung beispielsweise mit einem Nocken und einem Nockenfolger ausgebildet sein. Es kann auch eine Ausgestaltung vorgesehen sein, bei der eine Zahnradausgestaltung oder eine Kopplung mit einer Zahnstange oder einer Drehspindel vorgesehen ist. Ebenso kann eine Ausgestaltung mit einem einfachen Hubzylinder oder eine Ausgestaltung mit einer Art Hebebühne vorgesehen sein.

Insbesondere ist vorgesehen, dass die Positionsveränderungsvorrichtung mit einer Steuereinheit gekoppelt ist, durch welche der Betrieb der Positionsveränderungsvorrichtung steuerbar ist.

Es kann vorgesehen sein, dass das Induktionskochfeld eine erste Positionsveränderungsvorrichtung aufweist, durch welche lediglich der vertikale Abstand zwischen der Unterseite der Kochfeldplatte und dem Induktor als Ganzen veränderbar ist. Insbesondere ist dabei vorgesehen, dass die erste Positionsveränderungsvorrichtung an der wannenartigen Aufnahme angeordnet ist. Diese Befestigung an der sehr exponierten Komponente ist daher mechanisch stabil möglich. Andererseits werden durch diese Anbringung die induktorspezifischen Komponenten, wie die Rückschlusselemente und die Induktionsspule sowie ein Träger für diese beiden Komponenten, nicht beeinträchtigt.

Es kann auch vorgesehen sein, dass die erste Positionsveränderungsvorrichtung an mehreren Stellen des Induktors zu dessen Positionsveränderung relativ zur Unterseite der Kochfeldplatte angreifend ausgebildet ist. Durch eine derartige mehrpunktige Kontaktierung kann eine besonders gleichmäßige Krafteinwirkung bei der Positionsveränderung erzeugt werden. Ein unerwünschtes einseitiges zu großes Krafteinleiten, wodurch ggf. ein Verkippen oder ein Verklemmen auftreten könnte, wird dadurch vermieden. Dies wirkt sich auch vorteilhaft auf die elektromagnetische Wechselwirkung mit dem Zubereitungsgefäßen aus, da der Induktor möglichst gleichmäßig vertikal nach oben und nach unten verfahren werden kann, ohne sich irgendwie schräg zu neigen oder zu kippen.

Vorzugsweise ist vorgesehen, dass eine zweite Positionsveränderungsvorrichtung ausgebildet ist, durch welche lediglich der vertikale Abstand zwischen dem magnetischen Rückschlusselement und der wannenartigen Aufnahme veränderbar ist. Durch eine derartige Separierung in zwei eigene Positionsveränderungsvorrichtungen kann die Individualität der jeweiligen Postitionsveränderung der genannten Komponenten begünstig werden.

Besonders vorteilhaft ist es, dass die zweite Positionsveränderungsvorrichtung an einem Träger des Induktors angeordnet ist, wobei an dem Träger das magnetische Rückschlusselement und die Induktionsspule angeordnet sind. Dieser Träger ist vorzugsweise als plattenartiges Kunststoffteil ausgebildet.

Vorzugsweise ist vorgesehen, dass die zweite Positionsveränderungsvorrichtung ebenfalls an mehreren Stellen des magnetischen Rückschlusselements zu dessen Positionsveränderung relativ zur Aufnahme angreifend ausgebildet ist. Die genannten Vorteile ergeben sich analog zu der Ausgestaltung, wie sie bereits dazu bei der ersten Positionsveränderungsvorrichtung genannt wurden.

Vorzugsweise ist vorgesehen, dass das Induktionskochfeld eine Steuereinheit aufweist, welche zur Steuerung der zumindest einen Positionsveränderungsvorrichtung abhängig von Werten von elektrischen Betriebsparametern eines elektromagnetischen Schwingkreises, der zumindest den einen Induktor und ein auf der Kochfeldplatte über diesem Induktor positioniertes Zubereitungsgefäß umfasst, ausgebildet ist. Die Durchführung der Positionsveränderung kann somit äußerst bedarfsgerecht und situationsbezogen erfolgen, wodurch sich auch eine besondere Präzession ergibt. Dies trägt besonders vorteilhaft auf die Reduzierung von elektrischen Leistungsverlusten im Betrieb des Induktionskochfelds bei.

Vorzugsweise sind als Parameter die elektrische Ausgangsleistung des Schwingkreises und/oder die Schaltfrequenz der Schaltbauteile und/oder der elektrische Leistungsfaktor und/oder der Stromfluss durch den Induktor berücksichtigt. Dies sind beispielhafte Betriebsparameter und deren Aufzählung ist nicht als abschließend zu verstehen.

Bei einem erfindungsgemäßen Verfahren zum Betreiben eines Induktionskochfelds wird betriebsphasenabhängig der vertikale Abstand zwischen einer Unterseite der Kochfeldplatte des Induktionskochfelds und dem Induktor und/oder der vertikale Abstand zwischen einem magnetischen Rückschlusselement des Induktors und einer wannenartigen Aufnahme, welche den Induktor zumindest von unten umgibt, verändert. Die damit zu erreichenden Vorteile sind insbesondere im Hinblick auf die Reduzierung von Leistungsverlusten im Betrieb des Induktionskochfelds mit unterschiedlichen Zubereitungsgefäßen zu sehen.

Vorzugsweise wird vorgesehen, dass der vertikale Abstand zwischen der Unterseite der Kochfeldplatte und dem Induktor und/oder der vertikale Abstand zwischen dem Rückschlusselement und der Aufnahme abhängig von Werten von elektrischen Betriebsparametern eines elektromagnetischen Schwingkreises, umfassend den Induktor und ein auf der Kochfeldplatte über dem Induktor positioniertes Zubereitungsgefäß, verändert wird.

Besonders vorteilhaft kann vorgesehen sein, dass zumindest in einer Betriebsphase, in der elektrische Schaltbauteile, insbesondere Transistoren, des Induktors spannungslos geschaltet werden (ZVS, Zero Voltage Switching), überprüft wird, ob eine elektrische Ausgangsleistung des Induktors einer vorgegebenen elektrischen Zielleistung entspricht, wobei bei einem Abweichen der Ausgangsleistung von der Zielleistung der vertikale Abstand zwischen der Unterseite der Kochfeldplatte und dem Induktor und/oder der vertikale Abstand zwischen dem Rückschlusselement und der Aufnahme verändert wird.

Es kann insbesondere vorgesehen sein, dass die vorgebbare Zielleistung abhängig von einem den Induktor und ein auf der Kochfeldplatte über den Induktor positioniertes spezifisches Zubereitungsgefäß umfassenden Schwingkreis vorgegeben wird. Die Zielleistung kann dann individuell abhängig davon, welche Parameter die Komponenten des Induktors einerseits aufweisen, und welche Parameterspezifika das Zubereitungsgefäß aufweist, vorgegeben werden.

Betreffend die elektrische Leistung weisen Kochfelder exponentielle Verteilungen mit einem Leistungsmaximum auf, das viel größer ist als von anderen. Dieses Leistungslevel definiert die maximale Ausgangsleistung für die Kochzone. Auch wenn dieses Level selten benötigt wird, definiert es die Leistungskurve, die zu verwenden ist.

Es kann auch vorgesehen sein, dass zumindest in einer Betriebsphase, in der die maximale elektrische Leistung des Induktors (Boost-Betrieb) angefordert wird, überprüft wird, ob eine elektrische Ausgangsleistung des Induktors einer vorgegebenen Zielleistung entspricht, wobei bei einem Abweichen der Ausgangsleistung von der Zielleistung der vertikale Abstand zwischen der Unterseite der Kochfeldplatte und dem Induktor und/oder der vertikale Abstand zwischen dem Rückschlusselement und der Aufnahme verändert wird. Bei einer derartigen Vorgehensweise wird somit keine kontinuierliche sondern eine in diskreten Situationen eingeleitete Überprüfung durchgeführt.

Vorzugsweise wird bei einem Überwachen einer elektrischen Ausgangsleistung des Induktors von einer, insbesondere von einem den Induktor und ein auf der Kochfeldplatte über dem Induktor positioniertes spezifisches Zubereitungsgefäß umfassenden Schwingkreis abhängigen, vorgegebenen Zielleistung um einen Wert größer einem ersten Toleranzwert zumindest der vertikale Abstand zwischen der Unterseite der Kochfeldplatte und dem Induktor verändert. Dies bedeutet, dass bei relativ großen Abweichungen von der Zielleistung zumindest der gesamte Induktor in seinem vertikalen Abstand zur Unterseite der Kochfeldplatte verschoben wird. Zusätzlich kann dann auch noch vorgesehen sein, dass der vertikale Abstand zwischen der wannenartigen Aufnahme und den magnetischen Rückschlusselementen des Induktors verändert wird.

Insbesondere wird vorgesehen, dass bei einem Abweichen einer elektrischen Ausgangsleistung des Induktors von einer vorgegebenen Zielleistung um einen Wert kleiner dem ersten Toleranzwert nur der vertikale Abstand zwischen dem Rückschlusselement und der Aufnahme verändert wird. Dies reicht dann ggf. aus, um eine Anpassung an das Schwingkreissystem bezüglich des elektromagnetischen Verhaltens dahingehend durchzuführen, dass die elektrischen Leistungsverluste deutlich reduziert werden und das System nahe seiner Resonanzfrequenz arbeitet.

Vorzugsweise wird der Abstand zwischen der Unterseite der Kochfeldplatte und dem Induktor, insbesondere der Oberseite des Induktors, die der Unterseite der Kochfeldplatte zugewandt ist, kleiner oder gleich 10 mm ausgebildet. Insbesondere erfolgt somit eine maximale Abstandseinstellung von 10 mm. Der Abstand wird umso größer eingestellt, je größer die erforderliche Ausgangsleistung ist. Wird beispielsweise eine Ausgangsleistung von 3300 W benötigt, so wird abhängig von dem verwendeten Zubereitungsgefäß und dem Induktor der Abstand beispielsweise auf 8 mm eingestellt.

Mit der erfindungsgemäßen Vorgehensweise sowie der Ausgestaltung des Induktionskochfelds können Leistungsverluste bei den Schaltbauteilen von 20% und mehr erreicht werden.

Zusätzlich zu der Verschiebung des Induktors in vertikaler Richtung relativ zur Kochfeldplatte und/oder die Verschiebung des Rückschlusselements zur Aufnahme in vertikaler Richtung kann auch vorgesehen sein, dass der gesamte Induktor in einer Ebene senkrecht zu dieser vertikalen Richtung relativ zur Kochfeldplatte verschoben werden kann. Die oben genannten Vorteile können dadurch nochmals begünstigt werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Darstellung eines Ausführungsbeispiels eines erfindungsgemäßen Induktionskochfelds;
- Fig. 2: eine Schnittdarstellung des Kochfelds gemäß Fig. 1;
- Fig. 3: eine vergrößerte Teildarstellung eines Schnitts in Fig. 2 gemäß einem ersten Ausführungsbeispiel des Kochfelds;
- Fig. 4: eine vergrößerte Darstellung eines Teilausschnitts des Kochfelds gemäß Fig. 2 gemäß einem zweiten Ausführungsbeispiel;
- Fig. 5: ein Diagramm, in dem Leistungskurven abhängig von der Schaltfrequenz dargestellt sind; und
- Fig. 6: ein Ablaufdiagramm zur Durchführung einer Positionsveränderung eines Induktors oder Teilkomponenten davon in dem Kochfeld.

In den Figuren werden gleiche oder funktionsgleiche Elemente mit den gleichen Bezugszeichen versehen.

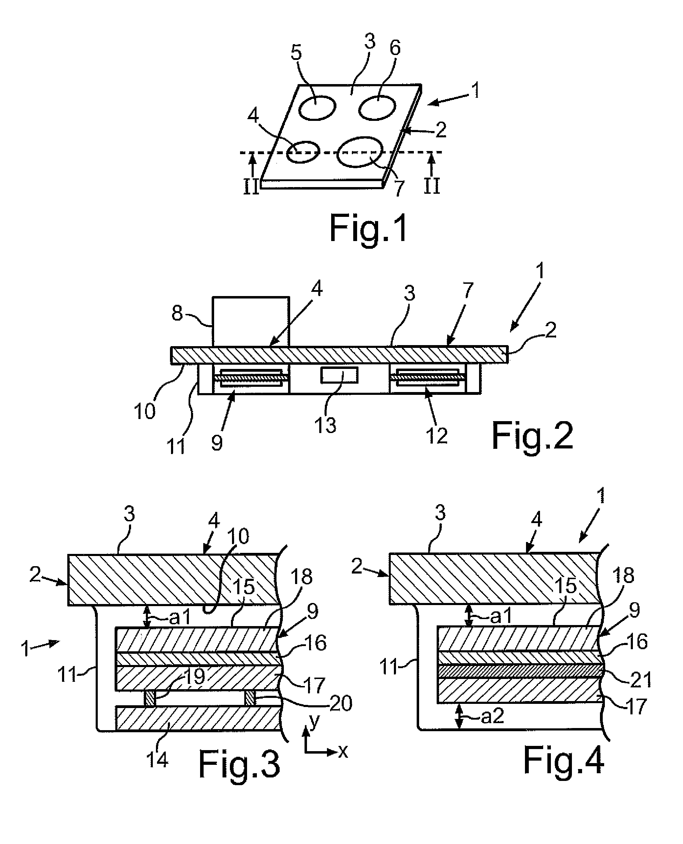

In Fig. 1 ist ein Induktionskochfeld 1 in schematischer perspektivischer Darstellung gezeigt. Das Induktionskochfeld 1 umfasst eine Kochfeldplatte 2, welche aus Glas oder Glaskeramik ausgebildet sein kann. Auf einer Oberseite 3 der Kochfeldplatte 2 sind in Position und Anzahl lediglich beispielhaft vier Kochzonen 4, 5, 6 und 7 gezeigt. Auf diesen Kochzonen 4 bis 7 können Zubereitungsgefäße, wie Pfannen oder Töpfe oder dergleichen aufgestellt werden.

Unter jeder Kochzone 4 bis 7 ist unterhalb der Kochfeldplatte 2 zumindest ein Induktor angeordnet. In elektromagnetischer Wechselwirkung zwischen einem Induktor und einem auf einer Kochzone 4 bis 7 aufgestellten Zubereitungsgefäß kann elektrische Energie in das Zubereitungsgefäß eingebracht werden und dadurch dieses erwärmt werden.

In Fig. 2 ist eine schematische Schnittdarstellung entlang der Schnittlinie II-II in Fig. 1 gezeigt. Dabei ist beispielhaft auf der Kochzone 4 ein Zubereitungsgefäß 8 aufgestellt. Wie zu erkennen ist, ist unterhalb der Kochzone 4 unter der Kochfeldplatte 2 ein erster Induktor 9 angeordnet. An einer Unterseite 10 der Kochfeldplatte 2 ist im Ausführungsbeispiel eine wannenartige Aufnahme 11 angeordnet, welche den Induktor 9 und einen unter der Kochzone 7 angeordneten weiteren Induktor 12 von unten und seitlich umgibt. Die wannenartige Aufnahme 11 ist vorzugsweise aus einem metallischen Material, insbesondere Aluminium ausgebildet. Insbesondere dann, wenn die Induktoren 9 und 12 im direkten Kontakt mit dem Boden der Aufnahme 11 sind, kann das elektromagnetische Feld eines Induktors 9 bzw. 12 dadurch verstärkt werden.

Das Induktionskochfeld 1 umfasst darüber hinaus eine Steuereinheit 13, welche zumindest zur Steuerung der Induktoren 9 und 12 sowie den nicht gezeigten Induktoren unterhalb den Kochzonen 5 und 6 ausgebildet ist.

In Fig. 3 ist in einer vergrößerten Schnittdarstellung ein Teilausschnitt des Induktionskochfelds 1 gemäß einer ersten Ausführung gezeigt. Das Induktionskochfeld 1 umfasst eine erste Positionsveränderungsvorrichtung 14. Diese ist an der Aufnahme 11 befestigt. Die Positionsveränderungsvorrichtung 14 ist eine elektro-mechanisch arbeitende Vorrichtung. Sie ist dazu ausgebildet, den gesamten Induktor 9 in vertikaler Richtung (y-Richtung) relativ zur Unterseite 10 der Kochfeldplatte 2 zu verschieben. Dadurch kann ein Abstand a1 zwischen der Unterseite 10 und einer Oberseite 15 des Induktors 9 verändert werden.

Der Induktor 9 umfasst einen Träger 16, welcher aus Kunststoff ausgebildet ist. An einer Unterseite des Trägers sind dabei ein oder mehrere magnetische Rückschlusselemente 17, welche Ferrite sind, und plattenartig ausgebildet sind, angeordnet. Auf einer Oberseite des Trägers 16 ist eine Induktionsspule 18 angeordnet. Der Induktor 9 bildet mit dem in Fig. 3 nicht gezeigten Zubereitungsgefäß 8 einen elektromagnetischen Schwingkreis. Dieser ist in seinem elektrischen Betriebsverhalten und somit im Hinblick auf die elektrischen Betriebsparameter insbesondere stark abhängig von der Ausgestaltung des Zubereitungsgefäßes 8. Um nun den Betrieb des Induktionskochfelds 1 und insbesondere des Induktors 9 bei aufgestellten Zubereitungsgefäß 8 optimieren zu können und insbesondere die elektrischen Leitungsverluste minimieren zu können, wird abhängig von Werten von elektrischen Betriebsparametern dieses Schwingkreises der Abstand a1 verändert. Als Betriebsparameter können dabei die Schaltfrequenz der Schaltbauteile des Induktors 9 und/oder die Ausgangsleistung des Schwingkreises und/oder der Leistungsfaktor eines Schwingkreises und/oder der Stromfluss durch den Induktor 9 berücksichtigt werden.

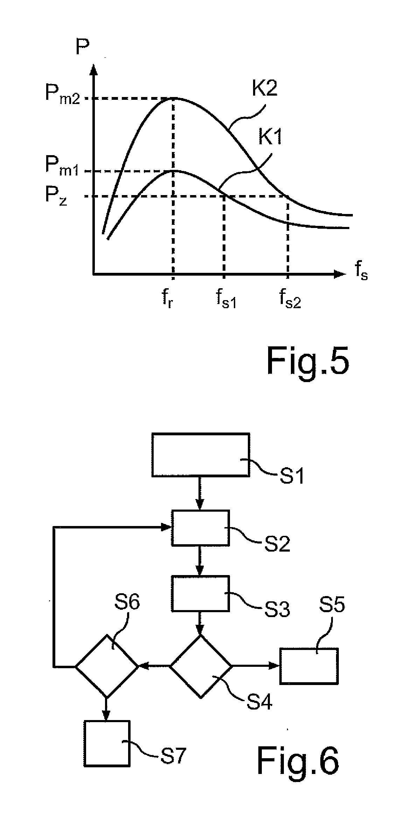

Bezüglich des Betriebsvorhabens ist in Fig. 5 beispielhaft ein Diagramm gezeigt, bei dem die elektrische Leistung P in Abhängigkeit von der Schaltfrequenz fₛ dargestellt ist. Es sind dabei zwei Kurven K1 und K2 für unterschiedliche Ausgestaltungen gezeigt. Beide Kurven K1 und K2 weisen die gleiche Resonanzfrequenz fᵣ auf. Sie weisen jedoch stark unterschiedliche Leistungsmaxima Pₘ₁ und Pₘ₂ auf. Daraus resultiert für eine vorgegebene elektrische Zielleistung P_{z} eine deutlich unterschiedliche Schaltfrequenz fₛ₁ und fₛ₂ für die unterschiedlichen Ausgestaltungen auf. Da der Abstand zwischen der Resonanzfrequenz fᵣ und der ersten Schaltfrequenz fₛ₁ deutlich kleiner ist als der Abstand zwischen der Resonanzfrequenz fᵣ und der zweiten Schaltfrequenz fₛ₂ ist, ist der Leistungsverlust bei der Ausgestaltung gemäß der Kurve K1 kleiner als bei der Ausgestaltung gemäß der Kurve K2.

Zurückkommend auf die Darstellung in Fig. 3 wird mit der Positionsveränderungsvorrichtung 14, die über mehrere Ankoppeleinheiten 19 und 20 mit dem Induktor 9 mechanisch kontaktiert ist, die Verschiebung nach oben oder unten bewirkt. Durch diese vertikale Positionsänderung können die elektrischen Parameter des elektromagnetischen Schwingkreises derart verändert werden, dass der Schwingkreis nahe der Resonanzfrequenz betrieben werden kann und somit die Leistungsverluste minimiert werden können.

In Fig. 4 ist ein weiteres Ausführungsbeispiel des Induktionskochfelds 1 in einer Schnittdarstellung mit einem Teilausschnitt gezeigt. Bei dieser Ausgestaltung ist vorgesehen, dass eine zweite Positionsveränderungsvorrichtung 21 ausgebildet ist, die im Induktor 9 selbst angeordnet ist. Insbesondere ist diese zweite Positionsveränderungsvorrichtung 21 an dem Träger 16 angeordnet. Mittels dieser zweiten Positionsveränderungsvorrichtung 21 kann ein Abstand a2 zwischen dem Boden der Aufnahme 11 und der Unterseite des magnetischen Rückschlusselements 17 verändert werden. Insbesondere bleibt dabei der Abstand a1 unverändert. Dies bedeutet, dass somit mit dieser zweiten Positionsveränderungsvorrichtung 21 nicht der gesamte Induktor 9 relativ zur Kochfeldplatte 2 verschoben wird, sondern lediglich eine Relativbewegung einer Teilkomponente des Induktors 9, nämlich eines magnetischen Rückschlusselements 17, zur Aufnahme 11 durchgeführt wird.

Es ist zu erwähnen, dass die Positionsveränderungsvorrichtung 21 auch an einer anderen Stelle des Induktors 9 und ggf. auch außerhalb des Induktors 9 angeordnet sein kann. Es kann auch vorgesehen sein, dass die Positionsveränderungsvorrichtungen 14 und 21 in einer einzigen Positionsveränderungsvorrichtung zusammengefasst sind.

Insbesondere ist vorgesehen, dass bei großen Abweichungen der gegenwärtigen elektrischen Ausgangsleistung von einer vorgegebenen Zielleistung und somit bei Abweichungen größer einem insbesondere vorgebbaren, Toleranzwert für die elektrische Leistung der gesamte Induktor 9 in seiner Position relativ zur Kochfeldplatte 2 verschoben wird, wie dies zu Fig. 3 erläutert wurde. Zusätzlich dazu kann dann jedoch auch eine Relativverschiebung des magnetischen Rückschlusselements 17 zum Boden der Aufnahme 11 erfolgen.

Ist die Abweichung der elektrischen Ausgangsleistung von einer vorgebbaren Zielleistung kleiner und insbesondere kleiner des vorgebbaren Toleranzwerts, so kann es ausreichen und vorgesehen sein, dass nur der Abstand zwischen dem magnetischen Rückschlusselement 17 und dem Boden der Aufnahme 11 verändert wird, wie dies zur Fig. 4 erläutert wurde.

Bezüglich der Vorgehensweise und der Überprüfung, ob eine vertikale Abstandsveränderung des Induktors 9 oder einer Teilkomponente davon erforderlich ist, wird zunächst gemäß dem vereinfacht dargestellten Ablaufdiagramm in Fig. 6 in einem ersten Schritt S1 eine elektrische Zielleistung erzeugt und an das Zubereitungsgefäß 8 abgegeben bzw. bereitgestellt. In einem weiteren Schritt S2 wird dann die Schaltfrequenz fₛ verändert und in einem Schritt S3 die Werte der elektrischen Parameter des elektromagnetischen Schwingkreises erfasst. Dabei wird in einem Schritt S4 überprüft, ob die elektrische Ausgangsleistung genügend ist. Trifft dies zu, so wird in einem Schritt S5 das Garprogramm ohne eine Positionsveränderung des diesen Schwingkreis zugeordneten Induktors gestartet bzw. weiter fortgeführt.

Wird jedoch in dem Schritt S4 festgestellt, dass die gegebene Ausgangsleistung nicht ausreicht, so wird in einem Schritt S6 überprüft, ob die elektrischen Parameter in ihren Werten noch modifiziert werden können. Ist dies möglich, so wird zum Schritt S2 zurückgekehrt und eine entsprechende Variation durchgeführt. Ist jedoch eine derartige Parametervariation nicht möglich, so wird in einem Schritt S7 die Position des Induktors relativ zur Kochfeldplatte 2 und/oder zumindest ein magnetisches Rückschlusselement des Induktors relativ zum Boden der Aufnahme verändert. Dabei ist zu erwähnen, dass die Art der Abstandsänderung (Positionsveränderung des gesamten Induktors und/oder lediglich Positionsveränderung des Rückschlusselements) abhängig von zumindest einem Wert zumindest eines elektrischen Betriebsparameters des Schwingkreises erfolgt. Diesbezüglich wird auf die Ausführungen oben verwiesen.

Im Hinblick auf die Leistungsverluste setzen sich diese durch die Summe der Leistungsverluste im eingeschaltenen Zustand der Schaltbauteile, der Verluste beim Anschalten der Schaltbauteile sowie den Verlusten beim Ausschalten der Schaltbauteile zusammen.

Ganz allgemein kann auch vorgesehen sein, dass durch die Positionsveränderung die Induktivität des Zubereitungsgefäßes im Ersatzschaltkreis beeinflusst bzw. geändert wird und der Arbeitsbereich und somit die Schaltfrequenz verschoben wird. Dies kann somit durch die Positionsveränderung des Induktors in gezielter und definierter Weise erfolgen. Dadurch kann verhindert werden, dass bei einem Aufheizen von zwei verschiedenen Zubereitungsgefäßen auf einer Kochzone verschiedene Schaltfrequenzen verwendet werden müssen. Diese vertikale Verschiebung des Induktors oder eines Teilelements davon kann somit ein weiterer Steuerungsparameter bei Steuerungsvorgängen sein, bei denen eine Anzahl n größer 1 von Zubereitungsgefäßen auf einer Kochzone, insbesondere einer sehr großen Kochzone, aufgestellt sind.

### Bezugszeichenliste

- 1: Induktionskochfeld
- 2: Kochfeldplatte
- 3: Oberseite
- 4, 5, 6, 7: Kochzonen
- 8: Zubereitungsgefäß
- 9: Induktor
- 10: Unterseite
- 11: Aufnahme
- 12: Induktor
- 13: Steuereinheit
- 14: Positionsveränderungsvorrichtung
- 15: Oberseite des Induktors
- 16: Träger
- 17: magnetisches Rückschlusselement
- 18: Induktionsspule
- 19, 20: Ankoppeleinheiten
- 21: Positionsveränderungsvorrichtung
- a1, a2: vertikale Abstände
- K1, K2: Kurven
- S1 - S7: Ablaufschritte

## Patentansprüche

1. Induktionskochfeld (1) mit einer Kochfeldplatte (2) und zumindest einem unter der Kochfeldplatte (2) angeordneten Induktor (9, 12), der zumindest ein plattenartiges magnetisches Rückschlusselement (17) und eine Induktionsspule (18) aufweist, welche mit dem magnetischen Rückschlusselement (17) in Wechselwirkung ist, und mit einer wannenartigen Aufnahme (11), durch welche der Induktor (9, 12) zumindest von unten umgeben ist, **dadurch gekennzeichnet, dass** zumindest eine Positionsveränderungsvorrichtung (14, 21) ausgebildet ist, durch welche der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) veränderbar ist.

2. Induktionskochfeld (1) nach Anspruch 1, **dadurch gekennzeichnet, dass** die Positionsveränderungsvorrichtung (14, 21) als elektro-mechanische Vorrichtung ausgebildet ist.

3. Induktionskochfeld (1) nach Anspruch 1 oder 2, **dadurch gekennzeichnet, dass** eine erste Positionsveränderungsvorrichtung (14) ausgebildet ist, durch welche der vertikale Abstand (a1) zwischen der Unterseite (10) der Kochfeldplatte (2) und dem Induktor (9, 12) veränderbar ist, insbesondere die Position des gesamten Induktors (9, 12) relativ zur Unterseite (10) veränderbar ist.

4. Induktionskochfeld (1) nach Anspruch 3, **dadurch gekennzeichnet, dass** die erste Positionsveränderungsvorrichtung (14) an der Aufnahme (11) angeordnet ist.

5. Induktionskochfeld (1) nach Anspruch 3 oder 4, **dadurch gekennzeichnet, dass** die erste Positionsveränderungsvorrichtung (14) an mehreren Stellen des Induktors (9, 12) zu dessen Positionsveränderung relativ zur Unterseite (10) der Kochfeldplatte (2) angreifend ausgebildet ist.

6. Induktionskochfeld (1) nach einem der vorhergehenden Ansprüche, **dadurch gekennzeichnet, dass** eine zweite Positionsveränderungsvorrichtung (21) ausgebildet ist, durch welche der vertikale Abstand (a2) zwischen dem Rückschlusselement (17) und der Aufnahme (11) veränderbar ist, insbesondere das Rückschlusselement (17) relativ zu anderen Komponenten (16, 18) des Induktors (9, 12) und der Aufnahme (11) in der Position veränderbar ist.

7. Induktionskochfeld (1) nach Anspruch 6, **dadurch gekennzeichnet, dass** die zweite Positionsveränderungsvorrichtung (21) an einem Träger (16) des Induktors (9, 12) angeordnet ist, an dem das Rückschlusselement (17) und die Induktionsspule (18) angeordnet sind.

8. Induktionskochfeld (1) nach Anspruch 6 oder 7, **dadurch gekennzeichnet, dass** die zweite Positionsveränderungsvorrichtung (21) an mehreren Stellen des magnetischen Rückschlusselements (17) zu dessen Positionsveränderung relativ zur Aufnahme (11) angreifend ausgebildet ist.

9. Induktionskochfeld (1) nach einem der vorhergehenden Ansprüche, **dadurch gekennzeichnet, dass** es eine Steuereinheit (13) aufweist, welche zur Steuerung der zumindest einen Positionsveränderungsvorrichtung (14, 21) abhängig von Werten von elektrischen Betriebsparametern eines elektromagnetischen Schwingkreises umfassend den Induktor (9, 12) und ein auf der Kochfeldplatte (2) über dem Induktor (9, 12) positioniertes Zubereitungsgefäß (8) ausgebildet ist.

10. Induktionskochfeld (1) nach Anspruch 9, **dadurch gekennzeichnet, dass** als Betriebsparameter die elektrische Ausgangsleistung des Schwingkreises und/oder die Schaltfrequenz und/oder der Leistungsfaktor und/oder der Stromfluß durch den Induktor (9, 12) berücksichtigt sind.

11. Verfahren zum Betreiben eines Induktionskochfelds (1), welches eine Kochfeldplatte (2) und zumindest einen unter der Kochfeldplatte (2) angeordneten Induktor (9, 12) aufweist, der zumindest ein plattenartiges magnetisches Rückschlusselement (17) und eine Induktionsspule (18) aufweist, welche mit dem magnetischen Rückschlusselement (17) wechselwirkt, und eine wannenartige Aufnahme (11) ausgebildet wird, durch welche der Induktor (9, 12) zumindest von unten umgeben ist, **dadurch gekennzeichnet, dass** betriebsphasenabhängig der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) verändert wird.

12. Verfahren nach Anspruch 11, **dadurch gekennzeichnet, dass** der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) abhängig von Werten von elektrischen Betriebsparametern eines elektromagnetischen Schwingkreises umfassend den Induktor (9, 12) und ein auf der Kochfeldplatte (2) über dem Induktor (9, 12) positioniertes Zubereitungsgefäß (8) verändert wird.

13. Verfahren nach Anspruch 11 oder 12, **dadurch gekennzeichnet, dass** zumindest in einer Betriebsphase, in der Schaltbauteile, insbesondere Transistoren, des Induktors (9, 12) spannungslos geschaltet werden, überprüft wird, ob eine elektrische Ausgangsleistung des Induktors (9, 12) einer, insbesondere von einem den Induktor (9, 12) und ein auf der Kochfeldplatte (2) über dem Induktor (9, 12) positioniertes spezifisches Zubereitungsgefäß (8) umfassenden Schwingkreis abhängigen, vorgegebenen Zielleistung entspricht, und bei einem Abweichen der Ausgangsleistung von der Zielleistung der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) verändert wird.

14. Verfahren nach einem der Ansprüche 11 bis 13, **dadurch gekennzeichnet, dass** zumindest in einer Betriebsphase, in der die maximale elektrische Leistung des Induktors (9, 12) angefordert wird, überprüft wird, ob eine elektrische Ausgangsleistung des Induktors (9, 12) einer, insbesondere von einem den Induktor (9, 12) und ein auf der Kochfeldplatte (2) über dem Induktor (9, 12) positioniertes spezifisches Zubereitungsgefäß (8) umfassenden Schwingkreis abhängigen, vorgegebenen Zielleistung entspricht, und bei einem Abweichen der Ausgangsleistung von der Zielleistung der vertikale Abstand (a1) zwischen der Unterseite (10) der Kochfeldplatte (2) und dem Induktor (9, 12) und/oder der vertikale Abstand (a2) zwischen dem Rückschlusselement (17) und der Aufnahme (11) verändert wird.

15. Verfahren nach einem der Ansprüche 11 bis 14, **dadurch gekennzeichnet, dass** bei einem Abweichen einer elektrischen Ausgangsleitung des Induktors (9, 12) von einer, insbesondere von einem den Induktor (9, 12) und ein auf der Kochfeldplatte (2) über dem Induktor (9, 12) positioniertes spezifisches Zubereitungsgefäß (8) umfassenden Schwingkreis abhängigen, vorgegebenen Zielleistung um einen Wert größer einem ersten Toleranzwert zumindest der vertikale Abstand (a1) zwischen der Unterseite (10) der Kochfeldplatte (2) und dem Induktor (9, 12) verändert wird, oder bei einem Abweichen einer elektrischen Ausgangsleitung des Induktors (9, 12) von einer, insbesondere von einem den Induktor (9, 12) und ein auf der Kochfeldplatte (2) über dem Induktor (9, 12) positioniertes spezifisches Zubereitungsgefäß (8) umfassenden Schwingkreis abhängigen, vorgegebenen Zielleistung um einen Wert kleiner dem ersten Toleranzwert nur der vertikale Abstand (a2) zwischen dem Rückschlusselement (17) und der Aufnahme (11) verändert wird.
